**Europäisches Patentamt**

**European Patent Office**

**Office européen des brevets**

(19)

(11) **EP 0 741 162 A1**

(12) **EUROPÄISCHE PATENTANMELDUNG**

(43) Veröffentlichungstag:
06.11.1996 Patentblatt 1996/45

(51) Int. Cl.$^6$: **C08K 5/00**, C08L 51/04
// (C08K5/00, 5:15, 5:372)

(21) Anmeldenummer: 96106738.6

(22) Anmeldetag: 29.04.1996

(84) Benannte Vertragsstaaten:
**BE DE ES FR GB IT NL**

(30) Priorität: **04.05.1995 DE 19516283**

(71) Anmelder: **BASF AKTIENGESELLSCHAFT**
**67056 Ludwigshafen (DE)**

(72) Erfinder:
• **Fischer, Wolfgang, Dr.**
**67067 Ludwigshafen (DE)**

• **Güntherberg, Norbert, Dr.**
**67346 Speyer (DE)**

(74) Vertreter: **Geissler, Bernhard, Dr. et al**
**Patent- und Rechtsanwälte**
**Bardehle . Pagenberg . Dost . Altenburg .**
**Frohwitter . Geissler & Partner**
**Postfach 86 06 20**
**81633 München (DE)**

(54) **Thermoplastische Formmasse**

(57)    Eine thermoplastische Formmasse, bestehend aus

A) 30 - 80 Gew.-%, bezogen auf A + B, einer näher definierten kautschukelastischen Pfropfgrundlage A
und
B) 20 - 70 Gew.-%, bezogen auf A + B, einer auf die Pfropfgrundlage A gepfropften näher definierten Hülle
und
C) 0,001 - 1 Gewichtsteile, bezogen auf 100 Gewichtsteile A + B, $\alpha$-Tocopherol,
und
D) die halbe bis zehnfache Menge, bezogen auf C, eines Thiodipropionsäureesters ausgewählt aus Dilauryl- oder Distearylthiodipropionat.

EP 0 741 162 A1

**Beschreibung**

Die Erfindung betrifft eine thermoplastische Formmasse aus einem Acrylatpfropfkautschuk mit verbesserter Wärmealterungsbeständigkeit.

Es ist bekannt, $\alpha$-Tocopherol (Vitamin E) als natürliches Antioxidans zur Stabilisierung bestimmter Polymerer einzusetzen. EP-A-0 384 472 offenbart zur Herstellung von Verpackungsmaterial von lichtempfindlichen Materialien Thermoplasten, u. a. ABS, die mit Vitamin E stabilisiert sind und daneben ein Lichtschutzmaterial erhalten. Unter anderem wird auch die Verwendung von Dilauryl- und Distearylthiodipropionat als Antioxidans erwähnt. JP 40/07053 beschreibt die Verwendung von $\alpha$-Tocopherol als nichttoxischen Stabilisator von SBR und Isopren-Kautschuken. In US 4 489 099 werden Gemische aus Vitamin E ($\alpha$-Tocopherol) und Dilaurylthiodipropionat zur Stabilisierung von Kaugummimassen auf Basis von SBR-Kautschuk offenbart. In JP 58/127653 werden Tocopherol und Lecithin einem lösungspolymerisierten Polybutadien zugegeben, um eine starke Nitrosamin-Bildung bei der Vulkanisation zu verhindern. JP 54/034352 betrifft Mischungen von Tocopherol (vom $\alpha$-, $\beta$- oder $\gamma$-Typ) mit Thiodipropionsäureestern zur Stabilisierung von Polyolefinpulvern. JP 54/074851 beschreibt mit MBS-Kautschuken schlagzähmodifizierte PVC-Massen, wobei der MBS-Latex mit einem Latex in Kontakt gebracht wird, der eine Stabilisatormischung aus Tocopherol mit Thiodipropionsäureestern enthält.

EP-A-0 542 108 beschreibt zur Stabilisierung von polyethylenhaltigen Kunststoffmaterialien Gemische aus einer Tocopherolverbindung, z. B. $\alpha$-Tocopherol, mit einem phosphor- oder schwefelhaltigen Antioxidans, wobei auch Thiodipropionsäureester, u. a. Distearylthiodipropionat, genannt werden.

WO 90/07547 offenbart Stabilisatorgemische aus $\alpha$-Tocopherol und Glycerin-mono-, -di und/oder -triestern von gesättigten oder ungesättigten Fettsäuren oder Gemischen davon, zur Stabilisierung von Thermoplasten, wie Polyvinylchlorid, Styrolpolymerisate, Polyamide, Polycarbonate, Polyester und Polyolefine. Neben dem genannten Stabilisatorgemisch wird auch die Zugabe weiterer Stabilisatoren, z. B. von Calciumstearat und Distearylthiodipropionat, offenbart.

Die Aufgabe der vorliegenden Erfindung bestand nun darin, Pfropfkautschuke zu stabilisieren, insbesondere die Wärmealterungsbeständigkeit zu erhöhen.

Überraschenderweise wurde nun gefunden, daß sich dieses technische Problem durch eine thermoplastische Formmasse aus Pfropfkautschuk und einem Stabilisatorgemisch wie sie in Anspruch 1 definiert ist, insbesondere einer solchen, die durch Vermischen des Pfropfkautschuks mit einer Emulsion bestehend aus einem Gemisch von $\alpha$-Tocopherol mit einem Thiodipropionsäureester erhalten ist, lösen läßt.

Somit betrifft die Erfindung thermoplastische Formmassen, bestehend aus,

A) 30 - 80 Gew. - %, bezogen auf A + B, einer kautschukelastischen Pfropfgrundlage aus, bezogen auf A,

    A1) 90 - 99,9 Gew.-% mindestens eines Alkylacrylats mit 1 bis 8 Kohlenstoffatomen im Alkylrest und
    A2) 0, 1 - 10 Gew.-% mindestens eines polyfunktionellen, vernetzend wirkenden Monomeren,

    und
B) 20 - 70 Gew.-%, bezogen auf A + B, einer auf die Pfropfgrundlage A gepfropften Hülle aus, bezogen auf B,

    B1) 0 - 100 Gew.-% eines vinylaromatischen Monomeren, bevorzugt Styrol, oder Alkylstyrole, bevorzugt $\alpha$-Methylstyrol,
    und/oder
    B2) 0 - 100 Gew. - % mindestens eines polaren, copolymerisierbaren ungesättigten Monomeren, bevorzugt Acrylnitril, Methylmethacrylat oder Phenylmaleinimid,

    wobei die Summe aus B1 und B2 100 Gew.-% beträgt,
    und
C) 0,001 - 1 Gewichtsteile, bezogen auf 100 Gewichtsteile A + B, $\alpha$-Tocopherol,
    und
D) die halbe bis zehnfache Menge, bezogen auf C, eines Thiodipropionsäureesters ausgewählt aus Dilauryl- oder Distearylthiodipropionat,
    und
E) 0 - 95 Gewichtsteile, bezogen auf A + B + C + D + E , einer Hartmatrix, bestehend aus, bezogen auf E,

    E1) 60 - 90 Gew.- % Styrol und/oder $\alpha$-Methylstyrol, und
    E2) 10 - 40 Gew.- % Acrylnitril,

wobei die Summe aus E1 und E2 100 Gew.-% beträgt,
und

E3) 0 - 40 Gewichtsteile PMMA, bezogen auf 100 Gewichtsteile E,

sowie gegebenenfalls
F) übliche Zusatzstoffe in wirksamen Mengen.

Weiterhin betrifft die Erfindung ein Verfahren zur Herstellung der thermoplastischen Formmassen, insbesondere die Herstellung der Stabilisatorgemische. Daneben umfaßt die Erfindung auch die Verwendung der Formmasse zur Herstellung von Formteilen sowie die daraus hergestellten Formteile. Diese Erfindungsgegenstände sind in den Ansprüchen definiert.

Die Herstellung der kautschukelastischen Pfropfgrundlage A und der Pfropfhülle auf Basis von Polyalkylacrylat-g-SAN ist in DE-PS 12 60 135 und US-A-3 055 859 sowie für eine Pfropfung in zwei Stufen in DE-A-31 49 358 und DE-A-32 27 555 beschrieben. Dabei wird zunächst das als Pfropfgrundlage A dienende kautschukartige Acrylsäureester-Polymerisat durch Emulsionspolymerisation von Acrylsäureestern hergestellt. Auf diesen dabei entstehenden Polyacrylsäureester-Latex wird ein Gemisch von vinylaromatischen Monomeren B1 mit einem polaren, copolymerisierbaren ungesättigten Monomeren B2 aufgepfropft, wobei die Pfropfmischpolymerisation ebenfalls vorzugsweise in Emulsion durchgeführt wird. Die kautschukelastische Komponente A kann auch, wie in der EP 132 339 beschrieben, auf einen harten, gegebenenfalls mit den unter A2 genannten Monomeren vernetzten Kern, der aus den für B genannten Monomeren aufgebaut ist, aufgepfropft werden. Vorzugsweise handelt es sich hierbei um einen harten Kern mit einer $T_g > 25\ °C$, wobei der Anteil des Kerns 5 - 50 Gew.-% bezogen auf A + B beträgt. Zur Erzielung von ASA-Polymerisaten mit guten mechanischen Eigenschaften wird der als Pfropfgrundlage dienende Polyacrylsäureester-Kautschuk vernetzt, d. h. bei seiner Herstellung werden die Acrylsäureester mit geringen Mengen von polyfunktionellen, vernetzend wirkenden Monomeren A2 copolymerisiert.

Als Monomere A1 für die Herstellung der Acrylsäureester-Polymerisate kommen vorzugsweise die Acrylsäurealkylester mit 1 bis 8 Kohlenstoffatomen, besonders bevorzugt mit 4 bis 8 Kohlenstoffatomen, im Alkylrest in Betracht. Besonders geeignet sind Acrylsäure-n-butylester und Acrylsäureethylhexylester. Die Acrylsäureester können bei der Herstellung der als Pfropfgrundlage dienenden Acrylsäureester-Polymerisate allein oder auch in Mischung miteinander eingesetzt werden.

Als polyfunktionelle Vernetzungs-Monomere A2 eignen sich insbesondere Monomere, die zwei oder mehr zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 12 60 135).

Die Herstellung des Pfropfmischpolymerisats aus den Komponenten A + B ist an sich bekannt und kann beispielsweise nach der in der DE-PS 12 60 135 beschriebenen Methode erfolgen. Hierzu wird zunächst das kautschukelastische Polymerisat, die Pfropfgrundlage A, hergestellt, indem der oder die Acrylsäureester A1 und das polyfunktionelle, vernetzend wirkende Monomere A2 in wäßriger Emulsion in an und für sich bekannter Weise bei Temperaturen zwischen 20 und 100°C, vorzugsweise zwischen 50 und 80 °C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Als Polymerisationsinitiatoren dienen insbesondere die gebräuchlichen Persulfate, wie z. B. Kaliumpersulfat, jedoch können auch Redox-Systeme zum Einsatz gelangen. Als Polymerisationshilfsstoffe können die üblichen Puffersubstanzen, durch welche pH-Werte von vorzugsweise 6 bis 9 eingestellt werden, z. B. Natriumbicarbonat und Natriumpyrophosphat, sowie 0 - 3 Gew.-% eines Molekulargewichtsreglers, wie Mercaptane, Terpinole oder dimeres $\alpha$-Methylstyrol, verwendet werden.

Zur Herstellung der auf die Pfropfgrundlage A gepfropften Hülle B eignen sich als vinylaromatisches Monomeres B1 Styrol, Alkylstyrole, bevorzugt $\alpha$-Methylstyrol, und kernalkylierte Styrole, wie p-Methylstyrol und tert.-Butylstyrol. Beispiele für bevorzugte polare, copolymerisierbare ungesättigte Monomere B2 sind Acrylnitril, (Meth)Acrylsäurealkylester mit 1 bis 4 Kohlenstoffatomen im Alkylrest, Acrylsäure, Maleinsäureanhydrid, Phenylmaleinimid, Acrylamid und/oder Vinylmethylether. Besonders bevorzugt werden Acrylnitril, Methylmethacrylat und Phenylmaleinimid. Die Pfropfmischpolymerisation kann zweckmäßig im gleichen System erfolgen wie die Emulsionspolymerisation zur Herstellung der Pfropfgrundlage A.

In einer bevorzugten Ausführungsform der Erfindung, der einstufigen Pfropfcopolymerisation, wird gemäß DE-PS 12 60 135 die Dispersion des Pfropfcopolymerisats mit einem Gemisch der Monomeren B1 und B2, vorzugsweise in wäßriger Emulsion, polymerisiert.

In einer anderen bevorzugten Ausführungsform der Erfindung, bei der die Pfropfung in zwei Stufen erfolgt, wird gemäß DE-A-31 49 358 bzw. DE-A-32 27 555 zuerst das vinylaromatische Monomere B1 in Gegenwart der Pfropfgrundlage A polymerisiert. In der zweiten Stufe wird dann die Pfropfmischpolymerisation mit einem Gemisch aus mindestens einem vinylaromatischen Monomeren B1 und mindestens einem polaren, copolymerisierbaren Monomeren B2 durchgeführt. Die Bedingungen sind hierbei so zu wählen, daß die Pfropthülle B 0 - 100, bevorzugt 20 - 90, besonders bevorzugt 40 - 85, Monomeres B1 und 0 - 100, bevorzugt 10 - 80, besonders bevorzugt 15 - 60, Monomeres B2, jeweils in Gew.-%, bezogen auf B, enthält. Insgesamt macht die Pfropfhülle B, bezogen auf das Pfropfcopolymerisat aus A + B, 20 - 70, bevorzugt 25 - 65, besonders bevorzugt 25 - 60 jeweils in Gew.-%, aus. Der Anteil der kautschukelastischen Pfropfgrundlage A beträgt somit 30 - 80, bevorzugt 35 - 75, besonders bevorzugt 40 - 75, jeweils in Gew.-%, bezogen auf A + B.

In einer bevorzugten Ausführungsform werden zur Herstellung der Stabilisatoremulsion die Komponenten C und D gemeinsam bei 60 - 70°C mit einer Carbonsäure mit 14 bis 24 Kohlenstoffatomen, bevorzugt Stearinsäure, aufgeschmolzen. Anschließend wird eine Base, insbesondere eine wäßrige KOH-Lösung, unter intensivem Rühren zugegeben. In einer alternativen Ausführungsform werden die Komponenten C und D gemeinsam aufgeschmolzen und in einer einen Emulsionsstabilisator enthaltenden wäßrigen Lösung dispergiert. Als Emulsionsstabilisator eignen sich Kaliumstearat, Alkylsulfonat oder Sulfobernsteinsäureester. In jeder der genannten Ausführungsformen erhält man eine Emulsion, die über mehrere Tage stabil bleibt.

Als Komponente C wird $\alpha$-Tocopherol verwendet. Bei der Komponente D handelt es sich um einen Thiodipropionsäureester ausgewählt aus den Dilauryl- und Distearylestern. Zur Herstellung der stabilisierten Pfropfkautschukdispersion wird die Dispersion des unstabilisierten Pfropfkautschuklatex mit einer der oben genannten Stabilisatoremulsionen derart vermischt, daß die Menge an $\alpha$-Tocopherol 0,001 - 1, bevorzugt 0,001 - 0,8, besonders 0,005 - 0,75, jeweils Gewichtsteile bezogen auf 100 Gewichtsteile A + B, und die Menge an Komponente D die halbe bis 10fache, bevorzugt die halbe bis 8fache, besonders bevorzugt die halbe bis 5fache Menge, bezogen auf C, beträgt. Die resultierende Mischung wird durch Zugabe von Salz, wie z. B. Magnesiumsulfat, koaguliert, dann entwässert und zu den erfindungsgemäßen thermoplastischen Formmassen verarbeitet.

In einer besonders bevorzugten Ausführungsform der Erfindung enthält die Formmasse bis zu 95, bevorzugt 5 - 90, Gewichtsteile bezogen auf 100 Gewichtsteile A + B + C + D + E, einer Hartmatrix E aus einem Copolymerisat von Styrol und/oder $\alpha$-Methylstyrol (Komponente E1) mit Acrylnitril (Komponente E2) und ggf. PMMA. Der Anteil an Styrol und/oder $\alpha$-Methylstyrol beträgt, bezogen auf E, 60 - 90, bevorzugt 62 - 85, besonders bevorzugt 72 - 84, Gew.-%, wobei die Summe aus E1 und E2 100 Gew.-% beträgt. Der Anteil an dem PMMA (Komponente E3) beträgt 0 - 40, bevorzugt 0 - 35, besonders bevorzugt 0 - 30, jeweils Gewichtsteile bezogen auf 100 Gewichtsteile E.

Die zusätzliche Hartmatrix E kann nach den herkömmlichen, bekannten Methoden, wie sie auch in DE-A-31 49 358 und DE-A-32 27 555 beschrieben sind, erhalten werden. So kann die Copolymerisation des Styrols und/oder $\alpha$-Methylstyrols mit dem Acrylnitril in Masse, Lösung, Suspension oder wäßriger Emulsion durchgeführt werden.

In einer weiteren bevorzugten Ausführungsform werden den Mischungen aus den Komponenten A, B, C, D und ggf. E als weitere Komponente F Zusatzstoffe zugesetzt, wie sie für ASA-Polymerisate üblich und gebräuchlich sind. Als solche seien beispielsweise genannt: Füllstoffe, weitere verträgliche Kunststoffe, Antistatika, Antioxidantien, Flammschutzmittel und Schmiermittel. Die Zusatzstoffe werden in üblichen Mengen, vorzugsweise in Mengen von 0,1 bis zu insgesamt 30 Gewichtsteilen, bezogen auf 100 Gewichtsteile der Mischung ( A + B + C + D + E + F ) eingesetzt.

Die verbesserte Wärmealterungsbeständigkeit des erfindungsgemäßen Acrylatpfropfkautschuks läßt sich einerseits bereits an dem erst gefällten und getrockneten Pfropfkautschuk feststellen, indem man die Zeit mißt, die unter definierten Bedingungen vergeht, bis eine exotherme Reaktion auftritt. Andererseits läßt sich die Stabilisierung auch am Fertigprodukt feststellen, indem man aus den erfindungsgemäßen Formmassen hergestellte Formkörper einer Wärmelagerung unterzieht und die Farbänderung berücksichtigt. In beiden Fällen zeigt sich, daß der erfindungsgemäß stabilisierte Pfropfkautschuk bzw. Formkörper länger stabil bleibt als bei einem vergleichbaren unstabilisierten Pfropfkautschuk.

Die erfindungsgemäßen Formmassen eignen sich zur Herstellung von Form-teilen, insbesondere von Fensterprofilen, Gartenmöbeln, Booten, Schildern, Lampenabdeckungen und Automobilteilen. Die erfindungsgemäßen Formmassen eignen sich besonders zur Herstellung von Formkörpern, bei denen eine hohe Schlagzähigkeit bei hoher Witterungs- und Alterungsbeständigkeit gefordert ist.

Die Erfindung wird anhand des folgenden Beispiels weiter veranschaulicht.

Beispiel

Poly-n-butylacrylat-g-SAN-Pfropfkautschuk wurde gemäß Beispiel 1 der DE-PS 12 60 135 hergestellt, wobei der Feststoffgehalt 40 Gew.-% betrug. Zur Herstellung des Stabilisatorgemisches wurden 20 g $\alpha$-Tocopherol und/oder Dilaurylthiodipropionat gemäß der untenstehenden Tabelle mit 2 g Stearinsäure bei 60 - 80°C aufgeschmolzen. Anschließend wurde die Schmelze unter intensivem Rühren mit 40 g einer 0,1%igen KOH versetzt. Die Polymerisatdispersion des Pfropfkautschuks wurde gemäß der untenstehenden Tabelle mit den entsprechenden Stabilisatorgemischen versetzt und vermischt. Der so erhaltene Latex wurde durch Ausfällen mittels einer Magnesiumsulfatlösung koaguliert und entwässert.

4

Der derart gewonnene pulverförmige Pfropfkautschuk wird einer thermischen Beanspruchung in Luft bei 260°C unterzogen. Als Maß für die Qualität der Mischung gilt die Zeit, die vergeht, bis eine exotherme oxidative Schädigung des Pfropfkautschuks eintritt.

Tabelle

| Beispiel Nr. | α-Tocopherol, Gew.-Teile bezogen auf 100 Gew.-Teile (A+B)** | Dilaurylthiodipropionat, Gew.-Teile bezogen auf 100 Gew.-Teile (A+B)** | $t_z$*, min |
|---|---|---|---|
| 1 (Vergleich) | -- | -- | 208 |
| 2 (Vergleich) | -- | 0,2 | 221 |
| 3 (Vergleich) | 0,2 | -- | 210 |
| 4 (erfindungsgemäß) | 0,05 | 0,2 | 262 |

*) Zeit bis zur Zersetzung (gemäß DSC, Maximum des exothermen Peaks)
**) 100 Gew.-Teile Pfropfkautschuk

Wie der Tabelle zu entnehmen ist, sind die erfindungsgemäßen Polymermassen bei Lagerung bei 260°C in Luft länger stabil als Polymermassen, denen nicht eine Kombination von α-Tocopherol und Dilaurylthiodipropionat zugesetzt wurde. Demgemäß führt die Erfindung zu Pfropfkautschuken mit verbesserter Wärmealterungsbeständigkeit.

**Patentansprüche**

1.   Thermoplastische Formmasse, bestehend aus

A) 30 - 80 Gew.-%, bezogen auf A + B, einer kautschukelastischen Pfropfgrundlage aus, bezogen auf A,

A1) 90 - 99,9 Gew.-% mindestens eines Alkylacrylats mit 1 bis 8 Kohlenstoffatomen im Alkylrest und
A2) 0,1 - 10 Gew.-% mindestens eines polyfunktionellen, vernetzend wirkenden Monomeren,

und
B) 20 - 70 Gew.-%, bezogen auf A + B, einer auf die Pfropfgrundlage A gepfropften Hülle aus, bezogen auf B,

B1) 0 - 100 Gew.-% eines vinylaromatischen Monomeren, bevorzugt Styrol, oder Alkylstyrole, bevorzugt α-Methylstyrol,
und/oder
B2) 0 - 100 Gew.-% mindestens eines polaren, copolymerisierbaren ungesättigten Monomeren, bevorzugt Acrylnitril, Methylmethacrylat oder Phenylmaleinimid,

wobei die Summe aus B1 und B2 100 Gew.-% beträgt,
und
C) 0,001 - 1 Gewichtsteile, bezogen auf 100 Gewichtsteile A + B, α-Tocopherol,
und
D) die halbe bis zehnfache Menge, bezogen auf C, eines Thiodipropionsäureesters ausgewählt aus Dilauryl- oder Distearylthiodipropionat,
und
E) 0 - 95 Gewichtsteile, bezogen auf 100 Gewichtsteile A + B + C + D + E , einer Hartmatrix, bestehend aus, bezogen auf E,

E1) 60 - 90 Gew.-% Styrol und/oder α-Methylstyrol,
und
E2) 10 - 40 Gew.-% Acrylnitril,

wobei die Summe aus E1 und E2 100 Gew.-% beträgt,
und

E3) 0 - 40 Gewichtsteile PMMA, bezogen auf 100 Gewichtsteile E,

sowie gegebenenfalls
F) übliche Zusatzstoffe in wirksamen Mengen.

2.  Formmasse nach Anspruch 1, wobei die Komponente A auf einen, gegebenenfalls mit den für A2 genannten Monomeren vernetzten harten Kern K mit einer $T_g > 25$ °C, bestehend aus den für B genannten Monomeren, aufgebaut ist, aufgepfropft ist, wobei der Anteil des Kerns 5 - 50 Gew.-% bezogen auf A + B beträgt.

3.  Formmasse nach Anspruch 1 und 2, dadurch gekennzeichnet, daß die Komponente C Dilaurylthiodipropionat ist.

4.  Verfahren zur Herstellung von Formmassen nach Anspruch 1, 2 oder 3, dadurch gekennzeichnet, daß man nach der Herstellung des Pfropfcopolymerisats aus A und B das Stabilisatorgemisch bestehend aus C und D als Emulsion zu der Dispersion des Pfropfcopolymerisats zugibt und anschließend ausfällt.

5.  Verfahren nach Anspruch 4, dadurch gekennzeichnet, daß man das Stabilisatorgemisch herstellt, indem man die Komponenten C und D vermischt, mit Stearinsäure aufschmelzt und anschließend mit einer Base, vorzugsweise KOH versetzt.

6.  Verfahren nach Anspruch 4, dadurch gekennzeichnet, daß man das Stabilisatorgemisch herstellt, indem man die Komponenten C und D vermischt und anschließend mit einer wäßrigen Emulgatorlösung, bevorzugt Kaliumstearat, Alkylsulfonat oder Sulfobernsteinsäureester, versetzt.

7.  Verwendung der Formmasse nach Anspruch 1, 2 oder 3 oder hergestellt gemäß dem Verfahren nach einem der Ansprüche 4 bis 6, zur Herstellung von Formteilen.

8.  Formteile aus Formmassen nach Anspruch 1, 2 oder 3 oder hergestellt gemäß dem Verfahren nach einem der Ansprüche 4 bis 6.

# EUROPÄISCHER RECHERCHENBERICHT

Europäisches
Patentamt

Nummer der Anmeldung
EP 96 10 6738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | DATABASE WPI<br>Section Ch, Week 7930<br>Derwent Publications Ltd., London, GB;<br>Class A14, AN 79-55313B<br>XP002010408<br>& JP-A-54 074 851 (KUREHA CHEM IND KK) ,<br>15.Juni 1979<br>* Zusammenfassung *<br>--- | 1,3,7,8 | C08K5/00<br>C08L51/04<br>//(C08K5/00,<br>5:15,5:372) |
| D,X | US-A-4 489 099 (SHAHEEN FRANK G  ET AL)<br>18.Dezember 1984<br>* Zusammenfassung; Ansprüche; Beispiele *<br>--- | 1,3-6 | |
| X | US-A-4 303 564 (KUROSHIMA NOBUAKI ET AL)<br>1.Dezember 1981<br>* Zusammenfassung; Beispiel 1 *<br>----- | 1 | |

RECHERCHIERTE SACHGEBIETE (Int.Cl.6)

C08K

Der vorliegende Recherchenbericht wurde für alle Patentansprüche erstellt

| Recherchenort | Abschlußdatum der Recherche | Prüfer |
|---|---|---|
| DEN HAAG | 7.August 1996 | Mettler, R-M |